# EUROPÄISCHE PATENTSCHRIFT

(11) **EP 1 787 744 B1**
(45) Veröffentlichungstag und Bekanntmachung des Hinweises auf die Patenterteilung: **03.09.2008**
(21) Anmeldenummer: 06023073.7
(22) Anmeldetag: 06.11.2006
(51) Int. Cl.: B23B 31/26, B23Q 1/00, B23Q 5/10

(54) **Motorspindel**
Motor spindle
Broche a moteur

(30) Priorität: 17.11.2005 DE 202005018002 U
(43) Veröffentlichungstag der Anmeldung: 23.05.2007
(73) Patentinhaber: DECKEL MAHO Pfronten GmbH, 87459 Pfronten (DE)
(72) Erfinder: Geissler, Alfred, 87459 Pfronten (DE); Kuisel, Manfred, 87459 Pfronten (DE)
(74) Vertreter: Beetz & Partner

(56) Entgegenhaltungen:
- EP-A1- 0 780 192
- EP-A2- 0 288 660
- DE-A1- 10 027 750
- JP-A- 7 112 303

## Beschreibung

Die Erfindung betrifft eine Motorspindel für Werkzeugmaschinen mit einem an einem Maschinenteil montierten Spindelgehäuse, mit einer im Spindelgehäuse in axial beabstandeten Wälzlagern gelagerten Arbeitsspindel, mit einem elektrischen Antriebsmotor, dessen Stator im Spindelgehäuse und dessen Rotor auf der Arbeitsspindel befestigt ist, mit einer in der Arbeitsspindel angeordneten Spanneinheit zum Fixieren und Lösen eines Werkzeugs, die durch einen hydraulischen Ringzylinder gegen die Kraft eines Federpakets betätigbar ist, und mit einer in die Spanneinheit integrierten inneren Kühlmittelzufuhr zum Werkzeug, die eine innerhalb des hydraulischen Ringzylinders angeordnete Drehdurchführung für das Kühlmittel in den Zentralkanal der Arbeitsspindel aufweist.

Spindeleinheiten mit innerer Kühlmittelzufuhr zum Werkzeug durch die Hohlwelle der Arbeitsspindel hindurch ermöglichen hohe Spanleistungen bei relativ langen Standzeiten der Werkzeuge. Die kritischen Teile der Spanwerkzeuge werden durch das innen zugeführte Kühlmittel intensiv gekühlt, sodass Überhitzungen der kritischen Werkzeugbereiche und damit Beschädigungen vermieden werden. Allerdings verlangt das innere Kühlmittelsystem einen erheblichen technischen Aufwand, was regelmäßig mit einer Verlängerung der Spindelabmessungen verbunden ist.

Aus der EP-A-0 780 192, welches eine Motorspindel gemäß dem Oberbegriff des Anspruchs 1 offenbart ist eine Motorspindel für Werkzeugmaschinen bekannt, bei welcher eine innere Kühlmittelzufuhr in die Spanneinheit integriert ist. Am maschinenseitigen Endabschnitt des Gehäuses befindet sich die Betätigungseinrichtung für die Spanneinheit, die als Zylinder/Kolben-Einheit mit einem ringzylindrischen Kolben ausgebildet ist. Die Drehdurchführung für die Kühlflüssigkeit befindet sich im Innenraum des ringzylindrischen Kolbens bzw. des Ringzylinders, wodurch eine besonders platzsparende Anordnung des Betätigungsmechanismus und auch der Drehdurchführung erzielt wird.

Aus der DE 100 27 750 B ist eine Motorspindel für eine Werkzeugmaschine bekannt, die eine in einem Spindelgehäuse in mindestens zwei axial voneinander beabstandeten Lagern gelagerte Arbeitsspindel bzw. Spindelwelle enthält. Die Spindelwelle ist Bestandteil einer Moduleinheit, welche zum Auswechseln in das Spindelgehäuse einschiebbar ist. Zum Erhöhen der Stabilität der Spindelwelle ist zusätzlich zu den vorderen Spindellagern im gehäuseseitigen Bereich der Spindelwelle ein weiteres Stützlager vorgesehen, mit dem die Spindelwelle drehbar am Spindelgehäuse abgestützt ist und das eine eigene Vorspanneinheit besitzt.

Ferner ist aus der DE 195 32 976 A eine Motorspindel bekannt, bei welcher die Arbeitsspindel in zwei axial voneinander beabstandeten Wälzlagerpaaren gelagert ist und an ihrem frei auskragenden hinteren Endteil den Rotor des elektrischen Antriebsmotors trägt. Auch bei dieser Motorspindel kann eine aus der Arbeitsspindel, den Wälzlageranordnungen und dem Rotor gebildete Baugruppe nach Lösen von Schraubverbindungen zur Frontseite hin in eine Gehäusebaugruppe ein- bzw. ausgebaut werden. Diese Montagemöglichkeit erleichtert und vereinfacht die Wartung und Reparatur von Motorspindeln, da der Ausbau der die empfindlicheren Aggregate enthaltenden inneren Baugruppe in der Regel vor Ort vorgenommen werden kann. Demgegenüber muss bei der herkömmlichen Vorgehensweise der Durchführung von Wartungs-, Reparatur- und Inspektionsarbeiten die gesamte Spindeleinheit incl. der Nebenaggregate aus der Maschine ausgebaut werden, was regelmäßig einen erheblichen Aufwand erfordert.

Aufgabe der Erfindung ist es, eine Motorspindel für Werkzeugmaschinen zu schaffen, bei welcher die Instandhaltungs- und Wartungsarbeiten trotz eines inneren Kühlmittelsystems auf einfache Weise durchgeführt werden können.

Diese Aufgabe wird erfindungsgemäß durch die Merkmale des Patentanspruchs 1 gelöst.

Bei der erfindungsgemäßen Motorspindel kann die die Arbeitsspindel, den Rotor und die Spanneinheit umfassende Baugruppe auf einfache Weise lediglich durch Lösen einiger Schrauben von der das Gehäuse mit dem Stator enthaltenden Baugruppe getrennt und zur Frontseite hin ausgebaut werden. Dies ermöglicht die Durchführung von Inspektions- und Reparaturarbeiten vor Ort, ohne dass die komplette Motorspindel ausgebaut werden müsste.

Gemäß einer zweckmäßigen Ausgestaltung der Erfindung weist die Drehdurchführung eine dichtend durch Federkraft an einen Stutzen anpressbare Hülse auf. Diese Hülse ist in dem rückwärtigen Teil des Spindelgehäuses innerhalb des Ringzylinders angeordnet. Der Stutzen ist Teil der die Arbeitsspindel und den Rotor enthaltenden demontierbaren Baugruppe, wobei die Hülse und auch der Stutzen je einen verschleißfesten Dichtungs-Gleitring aufweisen.

Gemäß einer weiteren zweckmäßigen Ausgestaltung der Erfindung ist die maschinenseitige Wälzlageranordnung der Arbeitsspindel in einem stabilen Tragring angeordnet, der in eine Ausnehmung im Spindelgehäuse lösbar eingepasst ist und beim Ausbau der die Arbeitsspindel und den Rotor enthaltenden Baugruppe mit demontiert wird. Dieser die rückwärtige Wälzlageranordnung umgebende Tragring sorgt für eine sichere und vibrationsarme Abstützung des hinteren Endes der Arbeitsspindel im Spindelgehäuse.

Im Folgenden wird ein Ausführungsbeispiel der erfindungsgemäßen Motorspindel anhand der Zeichnung im Einzelnen beschrieben. Es zeigen:
- Fig. 1: die modulartige demontierbare Baugruppe mit der Arbeitsspindel, dem Rotor und einer Spannzange im Axialschnitt;
- Fig. 2: die den Stator und das Spindelgehäuse enthaltende Baugruppe im Axialschnitt;
- Fig. 3: einen vergrößerten Ausschnitt des maschinenseitigen Endteils der Motorspindel im Axialschnitt.

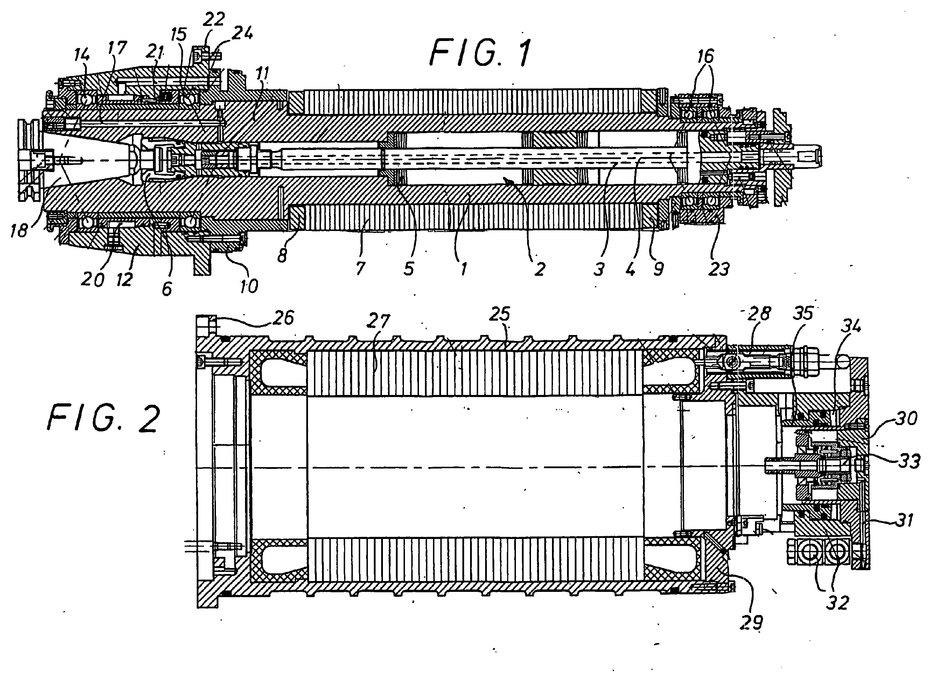

Die in den Figuren 1 und 2 dargestellte Motorspindel, bestehend aus der ersten Baugruppe nach Fig. 1 und der zweiten Baugruppe nach Fig. 2 ist für Universal-Werkzeugmaschinen zur Fräs- und Bohrbearbeitung von Metallwerkstücken konzipiert.

Die in Fig. 1 dargestellte Baugruppe enthält die durchgehende hohle Arbeitsspindel 1, in deren Innenraum eine Spanneinheit 2 angeordnet ist. Diese Spanneinheit enthält eine durchgehende Spannstange 3 mit einer zentralen Längsbohrung 4, die einen Flüssigkeitskanal bildet. Die Spannstange 3 ist begrenzt axial verschiebbar im Innenraum der Arbeitsspindel 1 aufgenommen und in ihrem mittleren Bereich von einem Federpaket 5 umgeben, das zangenartige Greifer 6 in Schließrichtung beaufschlagt.

Auf dem Außenumfang im mittleren Teil der Arbeitsspindel 1 ist der Rotor 7 eines elektrischen Antriebsmotors befestigt, und zwar zwischen zwei Stützringen 8, 9. An den vorderen Stützring 8 schließt sich eine Buchse 10 an, die auf einem verdickten Abschnitt 11 der Arbeitsspindel sitzt und mit einem vorderen Kopfteil 12 fest verschraubt ist. Die Außenfläche eines Abschnitts der Buchse 10 fluchtet mit der Außenfläche des Rotors 7 und der beiden Stützringe 8, 9. Die Arbeitsspindel 1 ist mit ihrem vorderen Endteil in zwei voneinander beabstandeten Wälzlagern 14, 15 und mit ihrem hinteren Teil in einem Wälzlagerpaar 16 gelagert. Ferner ist im vorderen Teil der Arbeitsspindel ein achsparalleler Flüssigkeitskanal 17 ausgebildet, der neben der Kegelaufnahme 18 ausmündet und mit seinem rückwärtigen Ende über eine Querbohrung mit dem mit Spülflüssigkeit beaufschlagten Innenraum der Arbeitsspindel verbunden ist. Im Kopfteil 12 sind die beiden Wälzlager 14, 15 spannungsfrei festgelegt. Ferner weist der Kopf einen Ringkanal 20 und einen mit diesem kommunizierenden Axialkanal 21 auf. An einem Endflansch 22 des Kopfes 12 sind Bohrungen zur Aufnahme von Verbindungsschrauben 23 vorgesehen, mit denen die in Fig. 1 dargestellte Baugruppe in die in Fig. 2 dargestellte Gehäuse-Baugruppe eingebaut wird.

Nach Fig. 2 enthält die Motorspindel ein im Wesentliches hohlzylindrisches Gehäuse 25, das über einen endseitigen Flansch 26 an einem - nicht dargestellten - Bauteil der Werkzeugmaschine durch Schraubverbindungen befestigt wird. An der Innenwandung des Gehäuses 25 ist in dessen mittlerem Teil ein Stator 27 dauerhaft befestigt, der mit dem Rotor 7 der in Fig. 1 dargestellten Baugruppe den Antriebsmotor bildet. Der Stator 27 wird über eine Anschlussanordnung mit Strom versorgt. Diese Stromversorgung 28 ist in einem Ring 29 festgelegt, der an dem in Fig. 2 rechten Stirnende des Gehäuses 25 durch Schrauben befestigt ist. In einem endseitig angeordneten profilierten Deckel 30 verlaufen Kanäle 31 für die Kühlflüssigkeitszufuhr, die einerseits mit Anschlussstutzen 32 und andererseits mit einem zentralen Durchflusskanal 33 verbunden sind.

Ferner ist in dem in Fig. 2 rechten Endabschnitt der Gehäuse-Baugruppe ein Ringzylinder 34 angeordnet, der mit Druckflüssigkeit über - nicht dargestellte - Kanäle beaufschlagt wird und einen Ringkolben 35 verschiebt, der über Mitnehmer auf das Tellerfederpaket einwirkt und die Spannzange in herkömmlicher Weise löst.

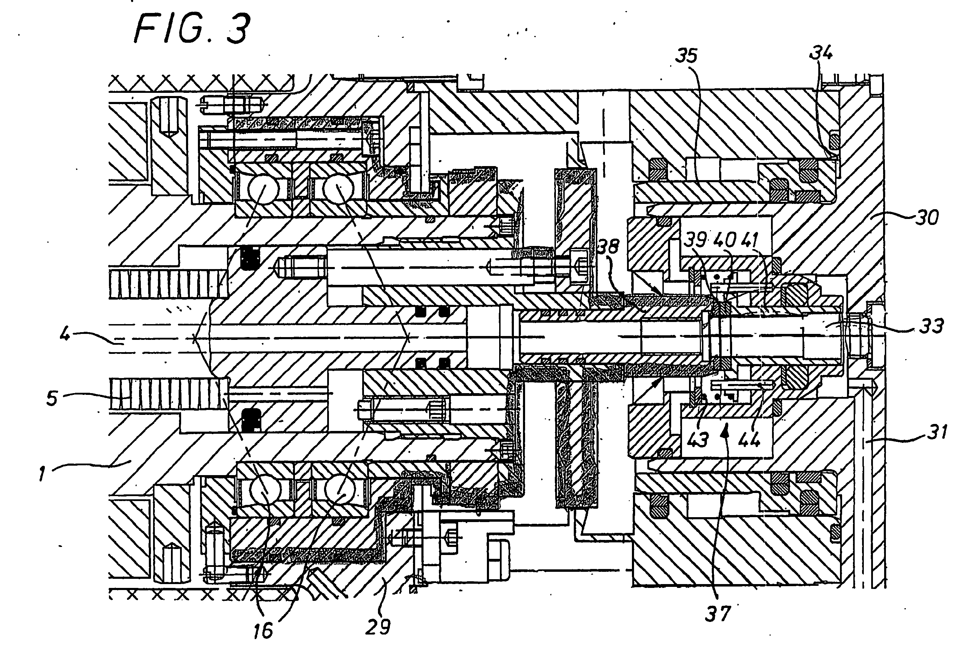

Fig. 3 zeigt in vergrößertem Axialschnitt die rechten Endteile der beiden in Fig. 1 und 2 dargestellten Baugruppen in zusammengebautem Zustand. Die graue Linie in Fig. 3 soll die "Trennfuge" andeuten.

In dem zentralen Bereich innerhalb des Ringkolbens 35 ist eine mit "Drehdurchführung" bezeichnete Anordnung 37 angeordnet, die einen Anschlussstutzen 38 enthält, der in den hohlen Endabschnitt der Arbeitsspindel eingreift. Dieser Stutzen 38 trägt an seinem Stirnende eine Ringscheibe 39 aus einem verschleißfesten Gleitmaterial, beispielsweise Bronze, Keramik, od. dgl. Gegen die Stirnfläche dieser Ringscheibe 39 wird ein Dichtungs-Gleitring 40 mit vorgegebener Federkraft angedrückt, der an der Stirnseite einer axial verschiebbaren Hülse 41 befestigt ist. Diese Hülse 41 weist einen Radialflansch 42 auf, an dem eine Feder 43 einwirkt und der an gehäusefesten Führungszapfen 44 gleitet.

In dem in Fig. 3 dargestellten Betriebszustand strömt Kühlflüssigkeit durch den im Deckel 30 ausgebildeten Zulaufkanal 31 in den Innenraum 33 und aus diesem in den Flüssigkeitskanal 4, der in der Spannstange 3 der Arbeitsspindel 1 vorhanden ist.

## Patentansprüche

1. Motorspindel für Werkzeugmaschinen, mit
- einem an einem Maschinenteil montierten Spindelgehäuse (25),
- einer im Spindelgehäuse (25) in axial beabstandeten Wälzlagern (14-16) gelagerten Arbeitsspindel (1),
- einem elektrischen Antriebsmotor (7, 27), dessen Stator (27) im Spindelgehäuse (5) und dessen Rotor (7) auf der Arbeitsspindel (1) befestigt sind,
- einer in der Arbeitsspindel (1) angeordneten Spanneinheit (2) für ein Werkzeug, die durch einen hydraulischen Ringzylinder (34) gegen die Kraft eines Federpakets (5) betätigbar ist, und
- einer in die Spanneinheit (2) integrierten inneren Kühlmittelzufuhr (33, 4) zum Werkzeug, die eine innerhalb des hydraulischen Ringzylinders (34) angeordnete Drehdurchführung (37) für das Kühlmittel aufweist,
**dadurch gekennzeichnet, dass**
- die Arbeitsspindel (1) mit dem Rotor (7), der Spanneinheit (2) und den Lageranordnungen (14-16) eine modulartige Baugruppe bildet, die von der Frontseite aus in das den Stator (27) tragende Spindelgehäuse (25) montierbar ist,
- der Ringzylinder (34) zum Lösen der Spanneinheit (2) und die Drehdurchführung in einem Endteil des Spindelgehäuses (25) angeordnet sind,
- die Drehdurchführung (37) eine dichtend durch Federkraft an einen Anschlussstutzen (38) anpressbare Hülse (39) aufweist, die im Gehäuseteil längs verschiebbar angeordnet ist, und
- die maschinenseitige Lageranordnung der Arbeitsspindel (1) in einem formfesten Tragring (23) festgelegt ist, der in eine entsprechende Ausnehmung in einem Gehäuseteil (29) im Passsitz einsetzbar ist.

2. Motorspindel nach Anspruch 1,
**dadurch gekennzeichnet, dass**
der Stutzen (38) Teil der demontierbaren die Arbeitsspindel (1) enthaltenden Baugruppe ist.

3. Motorspindel nach Anspruch 2,
**dadurch gekennzeichnet, dass**
die Hülse (41) und der Stutzen (38) je einen verschleißfesten Dichtungs-Gleitring (39, 40) aufweisen.

4. Motorspindel nach einem der Ansprüche 1 bis 3,
**dadurch gekennzeichnet, dass**
in der Gehäuse-Baugruppe radial innerhalb des hydraulischen Ringzylinders (34) eine Feder (43) und mehrere achsparallele Führungsstifte (44) für die Hülse (41) angeordnet sind.

## Claims

1. Motor spindle for machine tools, having
- a spindle housing (25) mounted on a machine part,
- a working spindle (1) mounted in axially spaced-apart roller bearings (14-16) in the spindle housing (25),
- an electric drive motor (7, 27) whose stator (27) is fixed in the spindle housing (5) and whose rotor (7) is fixed on the working spindle (1),
- a clamping unit (2) for a tool, which unit is disposed in the working spindle (1) and can be actuated by an hydraulic annular cylinder (34) against the force of a spring assembly (5), and
- an inner cooling medium supply (33, 4) to the tool, which supply is integrated in the clamping unit (2) and comprises a rotary feed-through (37) for the cooling medium disposed within the hydraulic annular cylinder (34),
**characterised in that**
- the working spindle (1) forms a modular assembly with the rotor (7), the clamping unit (2) and the bearing arrangements (14-16), which assembly can be mounted from the front side into the spindle housing (25) bearing the stator (27),
- the annular cylinder (34) for releasing the clamping unit (2) and the rotary feed-through are disposed in an end part of the spindle housing (25),
- the rotary feed-through (37) comprises a sleeve (39) which can be pressed against a connecting piece (38) in a sealing manner by means of resilient force and is disposed in the housing part in a longitudinally displaceable manner, and
- the machine-side bearing arrangement of the working spindle (1) is fixed in a rigid bearing ring (23) which can be snugly fitted into a corresponding recess in a housing part (29).

2. Motor spindle as claimed in Claim 1, **characterised in that** the piece (38) is part of the removable assembly containing the working spindle (1).

3. Motor spindle as claimed in Claim 2, **characterised in that** the sleeve (41) and the piece (38) each comprise a wear-resistant seal slide ring (39, 40).

4. Motor spindle as claimed in any one of Claims 1 to 3, **characterised in that** a spring (43) and several axially parallel guide pins (44) for the sleeve (41) are disposed in the housing assembly radially within the hydraulic annular cylinder (34).

## Revendications

1. Broche à moteur pour machines outils, comportant
- une poupée porte-broche (25) montée sur une pièce de machine,
- une broche motrice (1) disposée dans la poupée porte-broche (25) dans des roulements à billes (14-16) situés à une certaine distance axiale,
- un moteur d'entraînement électrique (7, 27), dont le stator (27) est fixé dans la poupée porte-broche (25) et dont le rotor (7) est fixé sur la broche motrice (1),
- un bloc de serrage (2) pour un outil, disposé dans la broche motrice (1), qui peut être actionné par le biais d'un cylindre annulaire hydraulique (34) à l'encontre de la force d'un bloc ressort (5), et
- une amenée de liquide de refroidissement interne (33, 4) à l'outil, intégrée dans le bloc de serrage (2), qui présente un passage tournant (37) disposé à l'intérieur du cylindre annulaire hydraulique (34) pour le liquide de refroidissement,
**caractérisée en ce que**
- la broche motrice (1) avec le rotor (7), le bloc de serrage (2) et les dispositifs de paliers (14-16) forme un groupe d'éléments de type module, qui peut être monté depuis la face frontale dans la poupée porte-broche (25) portant le stator (27),
- le cylindre annulaire (34) pour détacher le bloc de serrage (2) et le passage tournant sont disposés dans une partie finale de la poupée porte-broche (25),
- le passage tournant (37) présente une douille (39) compressible de manière étanche contre un raccord (38) grâce à la force de ressort, qui est disposée de manière à pouvoir être glissée dans le sens longitudinal dans la partie poupée, et
- le dispositif de paliers de la broche motrice (1), du côté machine, est fixé dans un anneau porteur (23) indéformable, qui peut être utilisé dans un évidement correspondant dans une partie de la poupée (29).

2. Broche à moteur selon la revendication 1, **caractérisée en ce que** le raccord (38) fait partie du module d'éléments démontable contenant la broche motrice (1).

3. Broche à moteur selon la revendication 2, **caractérisée en ce que** la douille (41) et le raccord (38) présentent chacun une bague coulissante d'étanchéité (39, 40) résistant à l'usure.

4. Broche à moteur selon l'une des revendications 1 à 3, **caractérisée en ce qu'**un ressort (43) et plusieurs tenons de guidage (44) parallèles axialement pour la douille (41) sont disposés dans le groupe d'éléments de la poupée dans le sens radial à l'intérieur du cylindre annulaire hydraulique (34).
